# EUROPEAN PATENT APPLICATION

(11) **EP 1 630 653 A1**
(43) Date of publication of application: **01.03.2006**
(21) Application number: 04020225.1
(22) Date of filing: 26.08.2004
(51) Int. Cl.: G06F 3/033, G06F 17/30

(54) **Car multimedia apparatus and method for controlling the display of hierarchically structured menus**

(71) Applicant: Harman/Becker Automotive Systems GmbH, 76307 Karlsbad (DE)
(72) Inventor: Kolletzki, Johannes, 72666 Neckartailfingen (DE)
(74) Representative: Lindner, Michael

(57) **Abstract**

The present invention relates to a car multimedia apparatus comprising a display device (14) for displaying information including hierarchically structured menus with menu items, a controller device (16) for selecting and activating menu items, and a control device (12) for controlling said display device and for receiving selecting and activating signals from said controller device. It further comprises a memory device (30) adapted to store information identifying a menu or a menu item, and a memory control device (12) for writing said information to the memory device and for reading said stored information out of said memory device, said memory control device (12) being adapted to write said information in response to an activation of a menu item or in response to an automatically or manually caused return to a predetermined menu, and to read said stored information and supply it to said control device upon activation of a predetermined switch (20), and said control device (12) being adapted to reach the menu or menu item identified by said supplied information upon activation of said switch.

## Description

The present invention relates to a car multimedia apparatus comprising a display device for displaying information including hierarchically structured menus with menu items, a controller device for selecting and activating menu items, and a control device for controlling said display device and for receiving, selecting and activating signals from said controller device. The invention also relates to a method for controlling the display of hierarchically structured menus on a display device of such a car multimedia apparatus.

Car multimedia apparatus are generally known. The applicant of the present application for example offers a plurality of different car multimedia apparatus under the brand name "Becker". In the context of the present application, car multimedia apparatus means every apparatus which comprises at least one of the following components: a car hifi unit, a car navigation unit, and a car telephone unit. The car hifi unit generally comprises amplifiers, radio tuners and optionally CD-/DVD-players. The car navigation unit comprises a GPS device, a CD-/DVD-player as a mass storage device and a control device for executing the route guidance software. The car telephone unit comprises for example a GSM device (or a UTMS device), optionally a modem as to allow for example Internet access.

Such car multimedia apparatus become more and more popular and the number of car buyers ordering a car multimedia apparatus increases. Further, the number of services or functions which are offered by recent car multimedia apparatus also increases with the result that the operation of such a car multimedia apparatus becomes more complex. Hence, the ergonomics and the man-machine-interface, respectively, increasingly gain importance.

Therefore, it is an object of the present invention to provide a car multimedia apparatus and a method for controlling the display of hierarchically structured menus on a display device of such a car multimedia apparatus with improved ergonomics.

This object is solved by the car multimedia apparatus as mentioned above and additionally comprising a memory device adapted to store information identifying a menu or a menu item, and a memory control device for writing said information to the memory device and for reading said stored information out of said memory device, said memory control device being adapted to write said information in response to an activation of a menu item or in response to an automatically or manually caused return to a predetermined menu and to read said stored information and supply it to said control device upon activation of a predetermined switch, and said control device being adapted to reach the menu or menu item identified by said supplied information upon activation of said switch.

Generally, a car multimedia apparatus offering a plurality of different services and functions employs a menu system for selecting and activating the desired services and functions. As it is known, a menu system consists of a plurality of menu items which may be selected and activated by the user. The menu items are organized and structured hierarchically, wherein menu items are assigned a specific menu. That is, a menu comprises those menu items which belong to the next higher menu item.

The inventive car multimedia apparatus allows that the user may reach the last used menu or menu item by just a simple operation of a predetermined switch. The car multimedia apparatus therefore comprises said memory device which allows to store information identifying the last menu or menu item, and said memory control device which organizes the writing and reading of this information from and into said memory device. The memory control device for example writes that information when the user operates the controller device for activating a menu item as to navigate to the next menu. The memory control device reads the stored information out of the memory device in response to the operation of the predetermined switch by the user. This information is supplied to the control device which then reaches the corresponding menu or menu item. That is, the menu or menu item identified by said information is displayed or the function assigned to the menu item is performed. Hence, in the context of the present invention, "reach" means jumping and displaying a menu or menu item on the display, or directly activating a function assigned to the menu item.

This mechanism of reaching the last menu or menu item is of particular value if said control device is adapted to cause the display device to display a predetermined menu if no selecting or activating signals are received within a predetermined time period (time-our period).

That is in other words that the control device displays a predetermined, preferably the main menu if no selection or activation have taken place within a predetermined time period. Hence, the displayed information on the display device "jumps back" or returns to a main menu which is often referred to as status screen.

The advantage of this measure is that the screen with the most important status information may be displayed very quickly after the selection or activation of any menu item without any inconvenience for the user because the user may quickly reach the last menu by simply operating said predetermined switch.

In a preferred embodiment said controller device comprises at least one rotary-push-button switch for selecting and activating menu items. Preferably, said controller device comprises said predetermined switch which is provided as a push switch. More preferably, said car multimedia apparatus comprises an audio unit having at least an amplifier, a radio tuner and preferably a CD/DVD-player. More preferably, the car multimedia apparatus comprises a navigation unit for providing route guidance, and a mobile communication unit for providing telephone and Internet services.

The object of the present invention is also solved by a method for controlling the display of hierarchically structured menus on a display device of a car multimedia apparatus, each menu comprising at least one menu item for being selected and activated, comprising the steps: displaying a menu on the display device, storing an information identifying the displayed menu or menu item in response to an activation of the menu item of said menu or in response to an automatically or manually caused return to a predetermined menu, and reading the stored information in response to an operation of a predetermined switch and then reaching the menu or menu item identified by said information regardless of what is presently displayed on said display device.

This method has the same advantages as the car multimedia apparatus as mentioned above so that it is referred to the respective description above.

In a preferred embodiment, a predetermined menu is displayed on the display device at the end of a time period of no selection and activation operation.

That is in other words, it is returned to a predetermined menu on the display if the user does not operate the controller device within a predetermined time period. Hence, it is ensured that the display device does not remain on the selected and activated menu and instead returns to a more informative menu (status screen) which is more valuable for the user. Hence, the user may not operate the controller device as to return to the main menu.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:
- Fig. 1: is a schematic block diagram of a car multimedia apparatus according to the present invention;
- Fig. 2: is a schematic diagram for illustrating a hierarchically structured menu system;
- Fig. 3: is a schematic diagram of different menus displayed on a display device for illustrative purposes;
- Fig. 4: is a schematic diagram of the content of the memory device during navigation through the menu system of Fig. 2; and
- Fig. 5: is a schematic front view of a car multimedia apparatus.

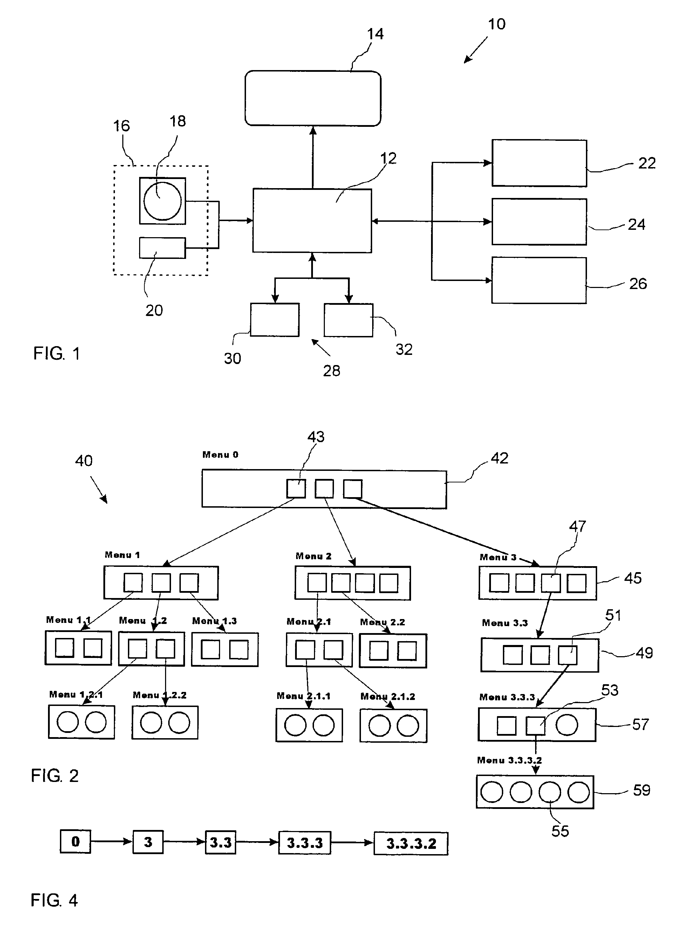

In Fig. 1 the functional structure of a car multimedia apparatus is schematically shown and indicated with reference numeral 10. The car multimedia apparatus 10 comprises a central control device 12 which serves to control the operation of the car multimedia apparatus 10. The central control device 12 is connected with a display device 14, preferably a dot matrix display, and transmits those information to the display device 14 which is to be presented to the user.

The car multimedia apparatus further comprises a controller device 16 which provides at least one so-called rotary-push-button switch 18 and at least one push switch 20. However, it is to be understood that the controller device 16 may comprise further controller elements, like push switches, rotary switches, rotary-push-button switches, etc. The controller device 16 serves to operate the car multimedia apparatus 10.

The car multimedia apparatus 10 is further provided with a car hifi unit 22, a navigation unit 24 and a mobile telecommunications unit 26.

The car hifi unit 22 offers entertainment functions, like radio, CD-/DVD, TV, etc., and hence comprises all electronic components necessary therefor. The navigation unit 24 offers at least route guidance and hence comprises a GPS component and a mass storage component for storing route information (preferably a DVD-player). Finally, the mobile telecommunications unit offers all telecommunication services, like telephone, Internet, SMS, E-mail, etc., and hence comprises at least a GSM or for example UTMS module for building up a connection to a telecommunications provider.

All functions and services offered by the above-mentioned units 22 to 26 are controlled by the central control device 12 and may be selected by the user via a hierarchically structured menu system.

The car multimedia apparatus 10 further comprises a memory device 28 including a first memory element 30 and a second memory element 32. The first memory element is adapted to store information identifying a menu (which will be described below) and the second memory element is adapted to store general information necessary for operation of the car multimedia apparatus 10, for example program code, setting information, etc.

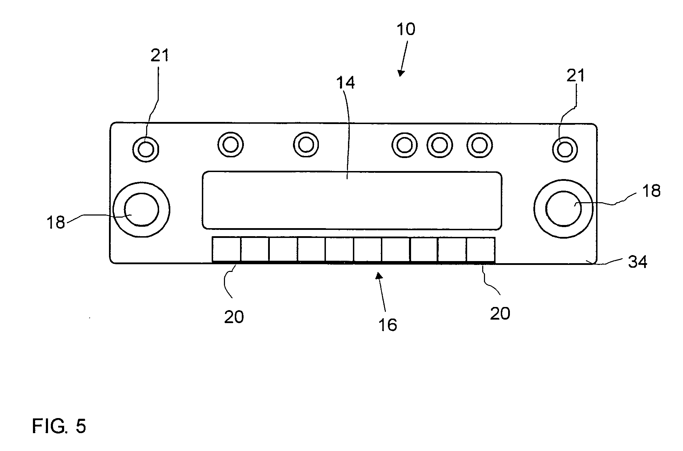

With reference to Fig. 5, a front view of a car multimedia apparatus 10 is schematically shown. The apparatus 10 comprises a front panel 34 supporting the display device 14 and the controller device 16. The controller device 16 comprises two rotary-push-button switches 18, ten push switches 20 serving as so-called soft keys, and seven further push switches 21 serving as so-called hard keys. The difference between soft keys and hard keys is that hard keys are assigned a fixed predetermined function whereas soft keys are assigned different functions depending on the menu displayed on the display device 14. Behind the front panel 34 a housing is provided (not shown) receiving most of the electronic components of the car multimedia device 10, particularly the central control device 12 and the memory device 28. The units 22 to 26 may also be provided in the housing or alternatively may be provided separately if space requirements makes such a separation necessary.

As already mentioned before, the user may operate the car multimedia apparatus 10 via the controller device 16, particularly via the rotary-push-button switches 18 and the soft and hard keys 20, 21.

Since the car multimedia apparatus 10 offers a plurality of functions, services and settings (more than the number of switches), the selection and activation of services, functions and settings is executed by means of a menu system.

Referring to Fig. 2, a part of such a menu system is schematically shown and indicated with reference numeral 40. As generally known, a menu system is hierarchically structured and comprises at least two, preferably a plurality of menu levels. In Fig. 2, five menu levels are shown. In the main menu level, a main menu is shown and indicated with reference numeral 42. The main menu 42 (menu 0) comprises three menu items 43 which may be selected and activated. This may be done by the rotary-push-button switch 18; particularly, a menu item of the menu displayed by the display device 14 may be selected by rotating the rotary-push-button switch 18 and may be activated by pushing same.

It is to be noted that the expression "menu" is used in the present application as to describe a group of menu items which are concurrently presented to the user for selection.

As it is apparent from Fig. 2, each menu item 43 branches to a menu in the next menu level, indicated by respective arrows. Hence, in the second menu level, three menus (menu 1, menu 2, menu 3) are provided. Each of these menus itself comprises menu items which may be selected and activated by the user. In this case, the user reaches the next menu level 3, also comprising a plurality of different menus with respective menu items.

In Fig.2 , the menu items are illustrated as squares and circles. The squares symbolize menu items serving to open a submenu, and the circles symbolize menu items serving to perform a function, etc.

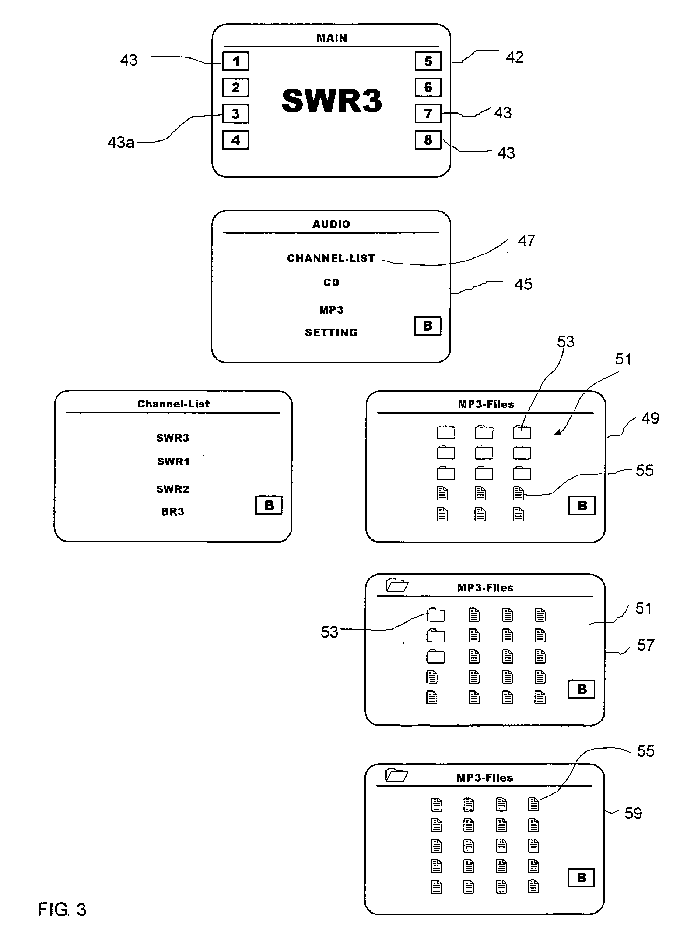

With reference to Fig. 3, a part of the menu system of the car multimedia apparatus 10 is shown and will now be described below. The main menu 42 is used as a status screen showing all necessary information, for example selected radio station, field strength of the GSM module, etc. Further, the main menu 42 comprises menu items 43 which are referenced with digits 1 to 8. Each menu item 43 serves to activate a specific service or function of the car multimedia apparatus. For example, menu item 43a (digit 3) serves to activate the audio functions. If the user selects and activates the menu item 43a, he/she reaches the next menu 45. This menu 45 comprises further menu items 47 which may be selected by the user. For example, the menu item "MP3" allows to activate the MP3 function of the audio unit, particularly allows to select the files to be played.

Assuming that the user selects and activates the menu item "MP3", the menu in the next menu level is reached. In Fig. 3, this menu is indicated with reference numeral 49. This menu 49 comprises again a plurality of menu items 51 in form of symbols, namely symbols 53 for file directories and symbols 55 for files. If a directory 53 menu item is selected and activated, the user may reach the next menu level being indicated by reference numeral 57. In this menu 57, menu items 51 in form of directories and files are presented for selection and activation. If the user activates a directory menu item, the next menu level is reached. In Fig. 3, the respective menu is indicated with reference numeral 59. In this menu 59, only file menu items are presented for selection. Hence, menu 59 is the respective end of this menu branch and the displayed menu item 55 serve to perform a function, e.g. the playback of the respective MP3-file.

Typically, the control device 12 returns to the main menu 42 if the user does not operate the controller device 16 within a predetermined time period. With reference to the example illustrated in Fig. 3, if the user navigates to the menu 59 and is prevented from selecting and activating any menu items 55 within a predetermined time period, the main menu 42 is displayed again.

In order to avoid the navigation back to the menu 59 via the menus 47, 49, 57, the car multimedia apparatus 10 comprises said first memory element 13, which stores information identifying the menu comprising the last activated menu item. This information may be called by activating a predetermined switch, preferably a hard key 21. In response to the activation of this hard key, the control device 12 receives this information and causes the display device 14 to display the respective menu. Hence, the user may directly reach the menu last recently used.

In order to describe the function of the first memory element 30 and the information stored therein, it is now assumed that the user has navigated from main menu 42 via menu 45, 49, 57 to menu 59. It is further assumed that the user has activated a menu item 55 in the menu 59.

As mentioned before, the first memory element 30 stores information identifying a menu. In the present example, the control device 12 stores the value "0" identifying the main menu 42 in response to an activation of a menu item of this menu 42. Then, upon activation of a menu item 47 of menu 45, the control device 12 writes the information "3" identifying the menu 45 (menu 3 in Fig. 2). Hence, if the user has selected menu 49 (menu 3.3 in Fig. 2) and activates the hard key 21 to return to the last menu, the menu 45 is displayed.

In response to the activation of menu item 51 of menu 49 (menu 3.3) the information "3.3" identifying this menu 49 is stored in the first memory element 30. Then, the information 3.3.3 identifying the menu 57 (menu 3.3.3 in Fig. 2) is stored in the first memory element in response to the activation of a menu item 53 of this menu.

At this stage, the menu 59 is presented by the display device 14. If the user does not operate the controller device 16, the control device jumps back to the main menu 42. If the user now operates the hard key 21, the control device 12 reads the value stored in the memory element 30, in the present case the information "3.3.3" identifying the menu 57, and returns to the respective menu 57. Hence, the user is now able to proceed further with the selection of MP3 files without prior navigation through the whole menu branch.

If the user has already selected and activated a menu item 55 in the menu 59, the information "3.3.3.2" identifying the menu 59 (menu 3.3.3.2 in Fig. 2) is stored in the memory element 30. Hence, in this case the user can reach the menu 59 instead of the menu 57 as mentioned above if he/she activates the hard key 21.

To sum up, the control device is adapted to protocol the activated menu which includes the menu item last activated. The control device 12 ensures that the respective value of the last activated menu is written into the first memory element. Further, the control device 12 ensures that this value is read out of the first memory element 30 in response to the activation of the respective hard key 21 and brings the menu identified by the read information to the display device 14.

In addition to the above mentioned embodiment, there are further alternatives and modifications, respectively, which will be discussed below.

According to a further preferred embodiment, the control device 12 is adapted to perform a kind of filtering with respect to the storage of menus and menu items. That is, not every activated menu or menu item is stored in the memory element 30. Rather, only those menu or menu item is stored which corresponds to a predetermined criterion.

For example, the control device 12 may store only the menu or menu item which have been used for an activation of a function, etc. and not only for jumping to the next submenu. With respect to the example shown in Fig. 2, this means that the menus 45, 49 and 57 are not stored because the selected and activated menu items only causes a jump to the next menu level (submenu). Further, the menu 59 is only stored if the menu item 55 is selected and activated. Otherwise, this menu 59 is also not stored.

According to a further modification of this embodiment, the control device 12 may be adapted to store menu 59 if the system jumps back to the main menu 42 after lapse of a time out period although menu item 55 has not been activated before.

As already mentioned before, there are two different types of menu items, namely menu items for jumping to a submenu (indicated as squares in Fig. 2), and menu items for performing a function (indicated as circle in Fig. 2).

With respect to menu items of the second type (performing a function), the system may offer the user two different actions upon activation of the hard key 21. First, an activation may cause the system to jump to the respective menu containing the stored menu item. Referring to Fig. 2, activation of stored "menu item 55" would result in the display of menu 59 (menu 3.3.3.2). Second, an activation may cause the system to perform the respective function assigned to this menu item. Referring to Fig. 2, activation of the stored "menu item 55" would result in the playback of the respective MP3-file indicated by menu item 55.

In a further preferred embodiment the system offers the user a selection option between both mentioned actions which may be chosen via the hard key 21, namely by a long push or a short push of the hard key. I.e., if the user pushes the hard key 21 for a short time period, the first action is performed and if the hard key 21 is pushed for a long time period, the second action is performed.

According to a further modification of the embodiment described, the control device 12 may store information about a menu or menu item in two different kinds, namely as a link and a reference. In cases where links are stored, an activation of a link (activation of the hard key) causes the system to display the respective menu and the menu containing the menu item, respectively. In cases where references are stored, an activation of a reference (i.e. activation of the hard key) causes the system to directly perform the function assigned to the menu item.

Those skilled in the art can now appreciate from the foregoing description that the broad teachings of the present invention can be implemented in a variety of forms. Therefore, while this invention has been described in connection with a particular example thereof, the true scope of the invention should not be so limited since other modifications will become apparent to the skilled practitioner upon a study of the drawings, specification and the claims.

## Claims

1. Car multimedia apparatus comprising
- a display device (14) for displaying information including hierarchically structured menus with menu items,
- a controller device (16) for selecting and activating menu items, and
- a control device (12) for controlling said display device and for receiving selecting and activating signals from said controller device,
**characterized by**
- a memory device (30) adapted to store information identifying a menu or a menu item, and
- a memory control device (12) for writing said information to the memory device and for reading said stored information out of said memory device,
said memory control device (12) being adapted to write said information in response to an activation of a menu item or in response to an automatically or manually caused return to a predetermined menu, and to read said stored information and supply it to said control device upon activation of a predetermined switch (20), and
said control device (12) being adapted to reach the menu or menu item identified by said supplied information upon activation of said switch.

2. Car multimedia apparatus of claim 1, **characterized in that** said control device (12) is adapted to cause the display device (14) to display a predetermined menu if no selecting or activating signals are received within a predetermined time period.

3. Car multimedia apparatus of claim 1 or 2, **characterized in that** said controller device (16) comprises at least one rotary-push button switch (18) for selecting and activating menu items.

4. Car multimedia apparatus of any of claims 1-3, **characterized in that** said controller device (16) comprises said predetermined switch (20) which is provided as a push switch.

5. Car multimedia apparatus of any of claims 1-4, **characterized by** an audio unit (22) comprising at least an amplifier, a radio tuner and preferably an CD-/DVD-player.

6. Car multimedia apparatus of claim 5, **characterized by** a navigation unit (24) for providing route guidance, and a mobile communication unit for providing telephony and Internet services.

7. Method for controlling the display of hierarchically structured menus on a display device (14) of a car multimedia apparatus, each menu comprising at least one menu item for being selected and activated, comprising the steps:
- displaying a menu on the display device,
- storing an information identifying the displayed menu or menu item in response to an activation of a menu item or in response to an automatically or manually caused return to a predetermined menu, and
- reading the stored information in response to an operation of a predetermined switch and then reaching the menu or menu item identified by said read information regardless of what is presently displayed on said display device.

8. Method of claim 7, wherein a predetermined menu is displayed on the display device at the end of a time period of no selection or activation operation.
